(19) Europäisches Patentamt

European Patent Office

Office européen des brevets

(11) **EP 1 341 326 A1**

(12) **EUROPEAN PATENT APPLICATION**

(43) Date of publication:
03.09.2003 Bulletin 2003/36

(51) Int Cl.7: **H04B 17/02**

(21) Application number: **02360071.1**

(22) Date of filing: **26.02.2002**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(71) Applicant: **ALCATEL**<br>**75008 Paris (FR)**<br><br>(72) Inventor: **Weis, Bernd X. Dr.**<br>**70825 Korntal (DE)** | (74) Representative: **Urlichs, Stefan, Dipl.-Phys. et al**<br>**Alcatel**<br>**Intellectual Property Department**<br>**70430 Stuttgart (DE)**<br><br>Remarks:<br>Amended claims in accordance with Rule 86 (2) EPC. |

(54) **Link restoration in a fixed wireless transmission network**

(57)      Restoration of a link in fixed wireless transmission network, in the case of failure, is achieved by redirecting a directional antenna (A1, A2) of a first network element (N41) from a second failed network element (N42) to a third network element (N43), whereby a new microwave link in the network is established. A network element (N1, N2) suited to allow fast and effective restoration in a fixed wireless transmission network has a directional antenna (A1, A2) and corresponding control circuitry which are controlled by a control device to redirect transmission direction in the case of a failure. Preferably, the directional antenna is a phased array antenna. The control device can either be a central network management system or a local control system of the network node.

Fig. 4b

EP 1 341 326 A1

# EP 1 341 326 A1

**Description**

**Field of the Invention**

The present invention relates to fixed wireless transmission networks and more specifically to link restoration in such networks.

**Background of the Invention**

Today's transmission networks such as for example an SDH (Synchronous Digital Hierarchy) network, consist of a number of interconnected nodes called network elements such as line multiplexers, add/drop multiplexers or cross-connects. The interconnections between the network elements use either optical fiber links, copper cables or wireless microwave links. Microwave links are often used in environmental situations where the deployment of cables are not feasible for economical or technical reasons.

Transmission networks are required to have a high reliability and availability, which means that if a failure occurs in a network due to a fiber breakage or a damage in a network element, the network needs to be restored within short time to maintain availability. Typically, some resources in the network are reserved for restoration purpose so as to take over operation of failed resources. In terms of interconnections between network elements, this means that spare links are provided in the network over which traffic is rerouted in the case of a failure. Obviously, this is costly and reserved network resources are unused for most of the time.

It is therefore an object of the present invention, to provide a method of restoring a transmission network using microwave links which uses network resources in a more economic way. Moreover, it is an object of the present invention, to provide a network element suited to allow fast and effective restoration.

**Summary of the Invention**

These and other objects that appear below are achieved by a method of restoring a link in fixed wireless transmission network by redirecting, in the case of failure, a directional antenna of a first network element from a second failed network element to a third network element, thereby establishing a new microwave link in the network.

A network element suited to allow fast and effective restoration in a fixed wireless transmission network has a directional antenna and corresponding control circuitry which are controlled by a control device to redirect transmission direction in the case of a failure. Preferably, the directional antenna is a phased array antenna. The control device can either be a central network management system or a local control system of the network node.

Advantages of the present invention include that it allows the establishment of a network with switching and protection capabilities exploiting the environmental and geographic properties of typical microwave deployment. Additionally, the invention is best suited to protect against catastrophic events which destroy an entire network node.

**Brief Description of the Drawings**

Preferred embodiments of the present invention will now be described with reference to the accompanying drawings in which

figure 1          shows a microwave link;
figure 2          directional properties of a phased array antenna;
figure 3          the principle of redirecting radio transmission direction;
figure 4a, 4b    protection switching in a fixed wireless transmission network;
figure 5          the use of a smart antenna for space multiplexing in a network; and
figure 6          a radiation diagram of a phased array antenna.

**Detailed Description of the Invention**

Typically the application of microwave technology is the wireless bridging of certain distances basically under 'line of sight' conditions. Microwave links are a basic technology - together with optical fibres or copper cables -constituting transmission networks.

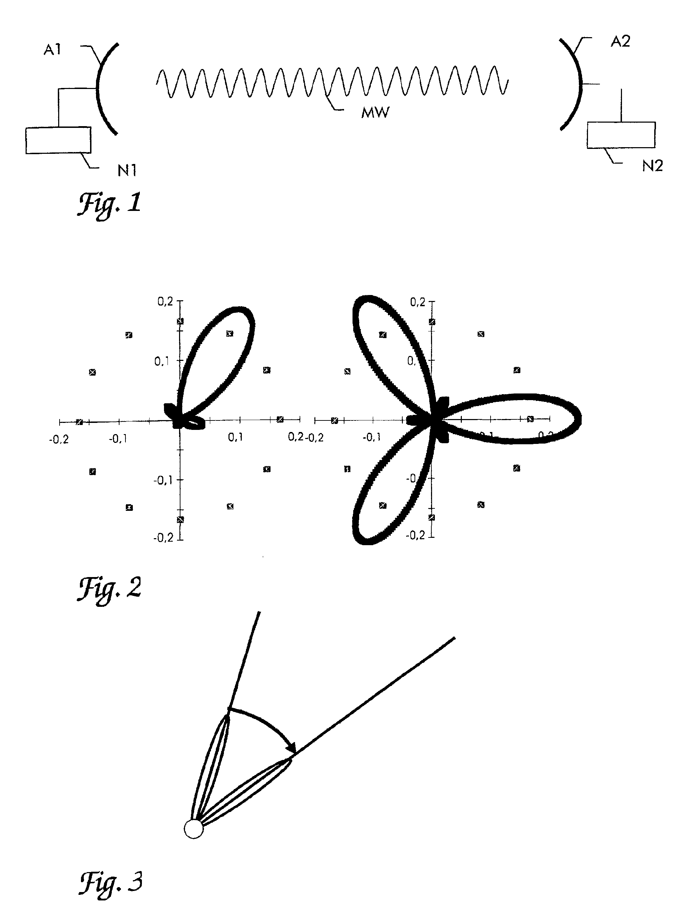

Figure 1 shows schematically a microwave link MW between a first node N1 an a second node N2. Each node has an antenna A1, A2 for transmitting and receiving microwave signals, respectively. In typical microwave network applications, these antennas are directed antennas, i.e., antennas which exclusively transmit into a limited number of directions, typically into only one direction.

A special type of directed antennas are so called phased array antennas, also known as "smart" antennas. Such an adaptive antenna is described for example in Simon C. Swales et al., "The Performance Enhancement of Multibeam Adaptive Base-Station Antennas for Cellular Land Mobile Radio Systems", IEEE Transactions on Vehicular Technology, vol.39, no. 1, February 1990, which is incorporated by reference herein. Phased array antennas allow to point the transmission power of the antenna along beams into one or more directions. Figure 2 shows the antenna characteristic of a circular array of 12 dipoles having only one main direction at 60° (left) or 3 main directions at 0°, 120°, 240° (right).

When all dipoles of the phased array antenna are arranged parallel the z-axis of the co-ordinate system, the antenna characteristic $f(\phi, \theta)$ of a phased array of M dipoles serving T beams is given by

$$f(\phi, \theta) = \sin^2\theta \sum_{n=1}^{M} \sum_{m=1}^{M} \sum_{g=1}^{T} \sum_{h=1}^{T} e^{j[k(s_n - s_m) - (a_{gn} - a_{hm})]}$$

where

$S_n$  $= x_n \cos\phi \sin\theta + y_n \sin\phi \sin\theta + z_n \cos\theta$

  $x_n, y_n, z_n$ are the co-ordinates of the n-th dipole in the plane,

$\phi$  is the angular co-ordinate in the x-y-plane, $0 < \phi < 2\pi$

$\theta$  is the angular co-ordinate off the z-axis, $0 < \theta < \pi$

$a_{gn}$  is the phase of the current feeding the n-th dipole for the g-th beam, i.e.

$$a_{gn} = k(x_n \cos\phi_g \sin\theta_g + y_n \sin\phi_g \sin\theta_g + z_n \cos\theta_g)$$

  $\phi_g, \theta_g$ are the angular co-ordinates of the beam

  k is $\frac{2\pi}{\lambda}$ with $\lambda$ the wave length of the carrier

Optimal reception at a mobile station located at a point with angular co-ordinates $(R, \phi_g \theta_g)$ is achieved when the n-th dipole is fed with a current

$$i_n(t) = \sum_{g=1}^{T} I_g e^{j[\omega t - a_{gn}]}$$

where $I_g$ is the amplitude of the feeding current.

Correspondingly the reception of a first network station from a second network station at a point with angular co-ordinates $(R, \phi_g, \theta_g)$ results in a current $i_n(t)$ at the n-th dipole.

A phased array antenna system hence produces a beam of radio frequency energy and direct such beam along a selected direction by controlling the phase of the energy passing between a transmitter/receiver and an array of antenna elements through a plurality of phase shifter sections. This direction is provided by sending a control word i.e., data representative of the desired phase shift, as well as attenuation and other control data such as a strobe signal, to each of the phase shifter sections.

As presented above the basic principle of phased array antenna technology is the possibility to point the maximum power of the antenna into one or more directions by suitably choosing the phases of the feeding currents. Thus, simultaneously changing the phases of the feeding currents results in an immediate switch of the beam from one defined direction to another as shown in figure 3.

A basic idea of the present invention is to use in a fixed microwave network adaptive antennas to redirect the direction of transmission in the case of a failure of one transmission node to another transmission node to restore the network. In a preferred embodiment, use is made of the phased array antenna technology. The invention thus uses the mechanism of controlling the transmission direction for protection switching.

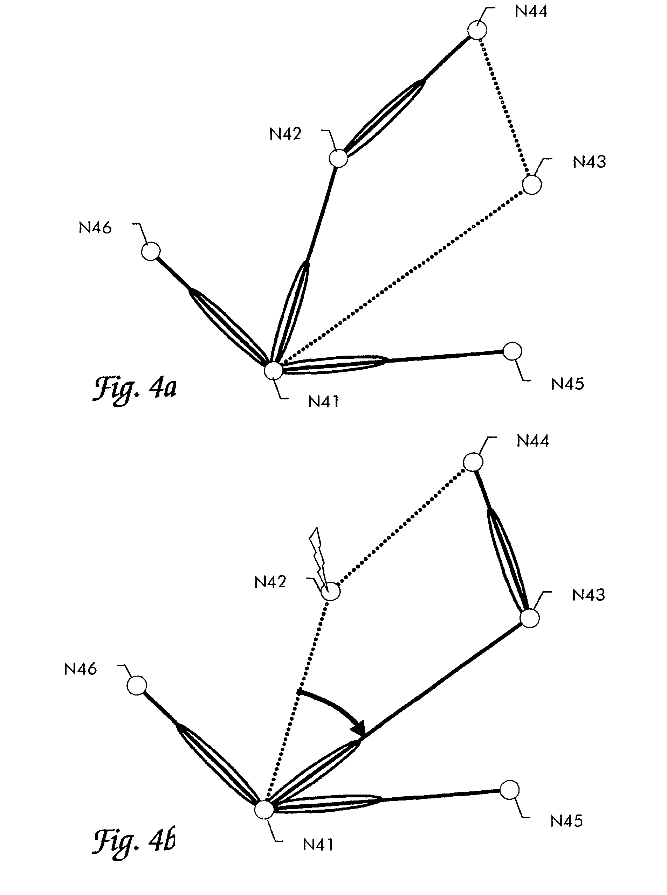

In figure 4a, microwave network is shown. It has six transmission nodes N41-N46 interconnected by microwave links. Links are established for example between network node N41 and network node N42 and between network node N42 and network node N44. If network node 42 is down for some reason the signal passing from node N41 to node N44 is lost. This loss of signal can be detected at the sending node and an immediate switch of the beam to node 43 is initiated, restoring the link almost immediately. This is shown in figure 4b. Network node N42 is affected by a failure and node N41 redirects the direction of transmission to node N43, which in turn redirects its direction of reception to node N41, too, to receive the microwave signal from node N41. Preferably, the restored microwave link between node N41 and node N43 uses a reserved protection carrier frequency.

Detection of a node failure can either be done autonomously be the transmitting node N41, for example by detecting the loss of signal in the backward direction from node N42 to node N41, or via a central network management, which informs the transmitting node of the failure and initiates restoration.

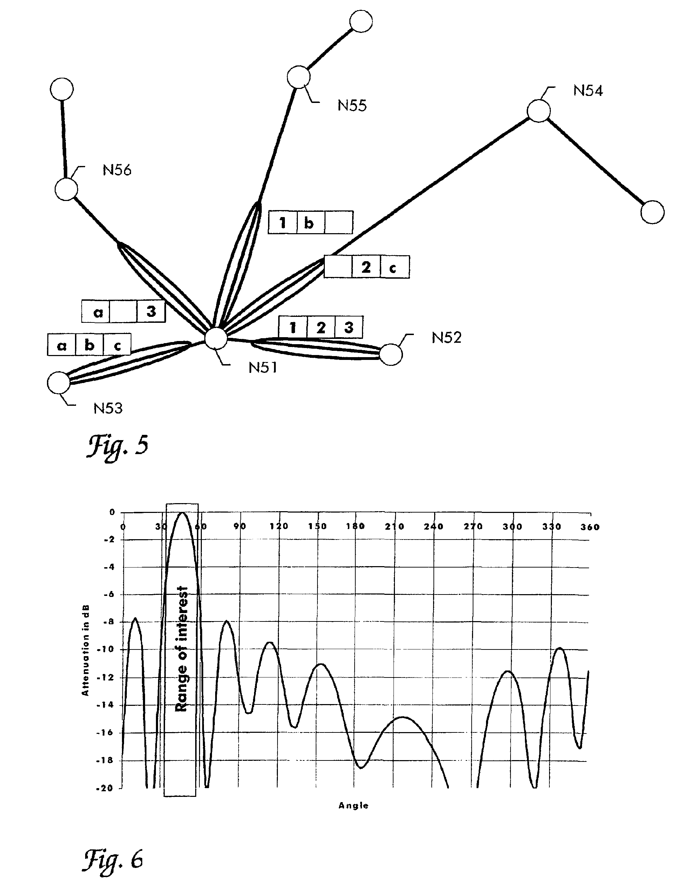

The use of adaptive antenna technology allows to have more than one signal processed at a time due to the principle of superposition. Hence, it is possible to point simultaneously with the same antenna a multitude of signals to different receiving stations as presented in figure 5. Exploiting this property even further a sort of space multiplexing is possible, which may be called adaptive SDMA (space division multiple access). If the signals arrive in packets they can even be switched packet-wise.

Figure 5 shows a network node 51 receiving microwave signal from network nodes N52 and N53. The signal from node N52 contains three time slots 1, 2, and 3 and the signal from node N53 contains three time slots a, b, and c. Node N51 now uses adaptive antenna technology and space multiplexing to transmit the signals to nodes N54, N55 and N56. For example, time slot received from node N53 and timeslot 3 received from node N52 are re-transmitted to node N56. Conversely, timeslots 1 and b are re-transmitted to node N55 and timeslots 2 and c are re-transmitted to node 56.

Use of the technology of redirecting transmission direction in microwave systems hence allows the establishment of a network with switching and protection capabilities exploiting the environmental and geographic properties of typical microwave deployment. It should be noted that the adaptive SMDFA technology can also be used without the protection switching capabilities explained above.

In switchable microwave networks the accuracy of the direction of the transmitting beam is crucial to the power requirements needed to set-up a functioning communication connection. In the following a simple algorithm is described as a preferred development of the invention that is based on a protocol between the communicating nodes and GPS information (GPS: Global Positioning System). This avoids the necessity of deploying Direction Of Arrival (DOA) algorithms (ESPRIT, MUSIC) which require substantial computing power.

A typical diagrams of directional properties of a microwave station with a "smart" antenna had been presented in figure 2.

To ensure minimum power requirement it is important that microwave stations have optimally directed beams. The location of a microwave station can easily be determined using the GPS position. This position however, does not provide the accuracy necessary for optimal main beam positioning. However, once a connection is established (here the GPS accuracy is sufficient) the following simple algorithm for fine-tuning beam positioning is proposed.

Figure 6 shows a radiation diagram of a smart antenna. It is evident that within the range of interest (shown gray-shaded) the radiation function is unimodal. Each microwave station determines the direction into which the beam has to be re-positioned to achieve optimum.

The following algorithm serves to find the direction of the maximum transmission power in a microwave link between a station 1 and a station 2:

Loop:

| | |
|---|---|
| Station 2: | Determines the receiving power and communicates this to Station 1. |
| Station 1: | Shifts its beam clockwise while maintaining the transmission power by some angle $\alpha_0$. |
| Station 2: | Determines again the receiving power and communicates this to Station 1. |
| Station 1: | Evaluates the results: |

- ■ If the power has become smaller it shifts the beam counterclockwise by the same angle $\alpha_0$ with respect to the initial position.
- ■ If the power has become bigger it shifts the beam further clockwise by the same angle $\alpha_0$. Repeat until the power becomes smaller.

Station 1:    Adjust $\alpha_{n+1} = \beta * \alpha_n$, $0 < \beta < 1$. Repeat until the desired accuracy is achieved.

In other words, a transmitting node adjusts its direction of transmission stepwise until a receiving node reports substantially maximum reception power. With this type of algorithm a desired accuracy of the beam is achieved using only minimum computing resources.

Having now described preferred embodiments of the invention in detail, it should be noted that several modifications are possible and apparent to those skilled in the art. For example, the antenna must not necessarily be an phased array antenna, but any kind of directional antenna with adjustable direction can be used. The antenna may for example be rotated to redirect it into a new transmission/reception direction, however, this would be more difficult in terms of required accuracy than using smart antenna technology. Another modification concerns the re-directing of antenna to a third node in the case of a failure. Obviously, it would be necessary for the transmitting node to know the direction where to re-direct the antenna. As described above, this information could be determined in a first step by the use of GPS information and subsequent fine tuning. However, the information can also be predetermined or configured by an operator or a central network management system.

**Claims**

1. A method of restoring in the event of a failure a fixed wireless transmission network comprising a number of nodes (N41-N46) each having at least one directional antenna (A1, A2) pointing to another of said nodes for establishing a microwave link (MW) in the network, the method comprising the steps of:

   - detecting a microwave link failure of a receiving node (N42) in the network and
   - redirecting the transmission direction of the directional antenna of a transmitting node (N41) to a third node (N43) to restore the failed link over said third node.

2. A method according to claim 1, wherein said antenna is a phased array antenna and said step of redirecting the antenna comprises shifting the phases of feeding currents of said phased array antenna.

3. A method according to claim 1, comprising the steps of determining the position of the third node using GPS information, re-directing the antenna to this position and fine-tuning the direction to achieve substantially maximum reception power at the third node (N43).

4. A method according to claim 1, further comprising the step of simultaneously re-transmitting received time-slots or packets with said directional antenna to multiple nodes using adaptive SMDA.

5. A network node (N1, N2) of a fixed wireless transmission network comprising a directional antenna (A1, A2) and corresponding control circuitry which are controlled by a control device to redirect transmission direction upon detection of a microwave link failure.

6. A network node according to claim 5, wherein said directional antenna is a phased array antenna.

7. A network node according to claim 6, wherein said control circuitry comprises phase shifters for shifting the phases of feeding currents of said phased array antenna.

**Amended Claims in accordance with Rule 86(2) EPC.**

1. A method of restoring in the event of a failure a fixed wireless transmission network comprising a number of nodes (N41-N46) each having at least one directional antenna (A1, A2) pointing to another of said nodes for establishing a microwave link (MW) in the network, the method comprising the steps of:

   - detecting a microwave link failure of a receiving node (N42) in the network and
   - redirecting the transmission direction of the directional antenna of a transmitting node (N41) to a third node (N43) remote from said failed receiving node (N42) to restore the failed link over said third node.

Fig. 1

Fig. 2

Fig. 3

Fig. 4a

Fig. 4b

**Fig. 5**

**Fig. 6**

**European Patent Office**

## EUROPEAN SEARCH REPORT

**Application Number**

EP 02 36 0071

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 666 653 A (AHL KARL-AXEL) 9 September 1997 (1997-09-09) | 1,2,5-7 | H04B17/02 |
| Y | * abstract; figures 2,5,6A,21 * <br> * column 2, line 32 - line 63 * <br> * column 6, line 64 - column 7, line 3 * <br> * column 15, line 26 - line 50 * <br> * claim 1 * | 3,4 | |
| Y | US 2001/003443 A1 (BROADSTONE STEVEN R ET AL) 14 June 2001 (2001-06-14) <br> * abstract * <br> * paragraph '0007! - paragraph '0009! * | 3 | |
| Y | EP 0 999 717 A (CALY INC) 10 May 2000 (2000-05-10) <br> * abstract; figure 2 * <br> * paragraph '0028! - paragraph '0029! * | 4 | |
| A,D | SWALES S C ET AL: "THE PERFORMANCE ENHANCEMENT OF MULTIBEAM ADAPTIVE BASE-STATION ANTENNAS FOR CELLULAR LAND MOBILE RADIO SYSTEMS" IEEE TRANSACTIONS ON VEHICULAR TECHNOLOGY, IEEE INC. NEW YORK, US, vol. 39, no. 1, 1 February 1990 (1990-02-01), pages 56-67, XP000128234 ISSN: 0018-9545 * the whole document * | 1-7 | TECHNICAL FIELDS SEARCHED (Int.Cl.7) <br><br> H04Q <br> H01Q <br> H04B |

The present search report has been drawn up for all claims

| Place of search | Date of completion of the search | Examiner |
|---|---|---|
| MUNICH | 17 July 2002 | Katruff, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 341 326 A1

## ANNEX TO THE EUROPEAN SEARCH REPORT
## ON EUROPEAN PATENT APPLICATION NO.

EP 02 36 0071

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2002

| Patent document cited in search report | | Publication date | Patent family member(s) | | Publication date |
|---|---|---|---|---|---|
| US 5666653 | A | 09-09-1997 | AU | 668076 B2 | 26-04-1996 |
| | | | AU | 8330691 A | 02-03-1992 |
| | | | BR | 9106739 A | 15-06-1993 |
| | | | CA | 2088993 A1 | 08-02-1992 |
| | | | DE | 69123590 D1 | 23-01-1997 |
| | | | DE | 69123590 T2 | 26-06-1997 |
| | | | EP | 0543857 A1 | 02-06-1993 |
| | | | ES | 2098364 T3 | 01-05-1997 |
| | | | RU | 2117395 C1 | 10-08-1998 |
| | | | WO | 9202996 A1 | 20-02-1992 |
| US 2001003443 | A1 | 14-06-2001 | AU | 4907497 A | 05-05-1998 |
| | | | EP | 0931425 A2 | 28-07-1999 |
| | | | JP | 2001505008 T | 10-04-2001 |
| | | | CN | 1233376 A | 27-10-1999 |
| | | | TW | 379488 B | 11-01-2000 |
| | | | WO | 9816077 A2 | 16-04-1998 |
| EP 0999717 | A | 10-05-2000 | BR | 9913999 A | 03-07-2001 |
| | | | CN | 1321381 T | 07-11-2001 |
| | | | EP | 0999717 A2 | 10-05-2000 |
| | | | EP | 1123608 A1 | 16-08-2001 |
| | | | WO | 0025485 A1 | 04-05-2000 |

For more details about this annex : see Official Journal of the European Patent Office, No. 12/82

10